# EUROPEAN PATENT SPECIFICATION

(11) **EP 2 336 235 B1**
(45) Date of publication and mention of the grant of the patent: **03.10.2012**
(21) Application number: 09380193.4
(22) Date of filing: 18.12.2009
(51) Int. Cl.: C08L 23/00, C08L 101/00, C08L 9/06, C08L 23/02, C08L 23/04, C08L 23/10, C08L 23/12, C08L 23/16, C08L 23/26, C08L 21/00, C08J 3/05

(54) **Water-based dispersion of thermoplastic polymer and non-thermoplastic elastomer**
Dispersion auf Wasserbasis auf einem thermoplastischen Polymer und nicht thermoplastisches Elastomer
Dispersion à base d'eau sur un polymère thermoplastique et un élastomère non thermoplastique

(43) Date of publication of application: 22.06.2011
(73) Proprietor: Actega Artistica S.A., 36475 Porrino Pontevedra (ES)
(72) Inventor: Lourido, Ricardo, 36691 Soutomayor (ES); Quibén, José, Dr., 36210 Vigo (ES); Ramos, Teresa, Dr., 36208 Vigo (ES)
(74) Representative: Maiwald Patentanwalts GmbH

(56) References cited:
- EP-A1- 0 283 611

## Description

### Field of the invention

The present invention relates to a water-based dispersion comprising as a dispersed phase in a water-based medium a blend of a thermoplastic polymer and a non-thermoplastic elastomer. The present invention also relates to a method for providing such a dispersion. The dispersion of the present invention may be used as a sealant that is applicable, e.g. by spraying, and exhibits minimal migration levels.

### Background of the invention

Food containers for packaging and storing foodstuffs should preserve the properties of the food by maintaining the required vacuum, and avoiding potential pollution by external agents. Therefore, containers for food normally include a sealant, for example within a gasket in a closure element, such as a lid, or as a sealant layer within a package. However, conventional sealant materials may transfer constituents and contaminants to food in quantities which could endanger human health, change the composition of the food or change the organoleptic characteristics of the food. On the other hand, materials and articles intended to come into contact with food are required according to official European regulations to be free of contamination of food (Regulation (EC) No 1935/2004 of the European Parliament and of the Council).

At present the lids for rigid glass or plastic food containers are sealed for example with PVC compounds in the form of organosols which are applied by spraying the compound into the external perimeter of the lids. It is known that PVC organosol formulations contain a large amount of plasticizers which could be easily extracted by food, especially fatty foods, exceeding the migration limit established by the European Directive 2002/72/EC relating to plastic materials and articles intended to come into contact with foodstuffs and other National regulations.

In order to comply with the above requirements, PVC gaskets are being replaced by other sealant materials as described, e.g., in US patent application No. 2002/0101043 A1, and in the International patent application WO 2009/059788 A1. Particularly, the latter publication describes an application process based on melt extrusion of PVC-free granulates that are said to solve the problems linked to the high migration levels of plasticized PVC compounds. However, conventional equipment for applying, e.g., the above described PVC organosol formulations cannot be employed for the application of melt extrusion sealants. Accordingly, the manufacturers of sealed packages would be required to introduce new equipment which involves additional costs.

On the other hand, sprayable compounds have been extensively used to seal metallic lids to metallic packages such as cans. These groups of products are mainly water or solventbased dispersions of modified rubbery materials without extractable materials such as extractable plasticizers. Therefore, they are considered as replacements of the PVC plastisols used, e.g., in non-metallic jars.

Sprayable rubber-like compounds are conventionally prepared either from natural or synthetic latices or from natural or synthetic solid rubbers. In both cases, the properties of the polymeric base are modified by adding different organic and inorganic constituents. The compounding of latexes can be carried our as described in R. J. Noble, 'Latex in industry', Rubber Age, New York, 1953, and references cited therein. In the case of rubbers, the initial processing step includes the mastication of the polymeric base with other organic and inorganic substances (cf: e.g., C. M. Blow, 'Rubber Technology and manufacture', Institution of the Rubber Industry, Newns-Butterworths, London, 1971, or K. Nadgi, 'Rubber as an Engineering Material: Guideline for Users', Hanser Publishers, Munich, 1993, and references cited therein).

Furthermore, in order to obtain a sprayable formulation, the compounded rubber typically has to be dispersed either in aqueous or solvent media. A description of rubber dispersion into water can be found, for example, in 'Latex in Industry' as cited above.

Besides the classic use of organic and inorganic substances in rubber or latex compounding, an increased number of materials were prepared, starting last quarter of 20^{th} century, by blending rubber-like polymers with plastic polymers of different types, mainly polyolefins. In some cases, these materials are known as TPE (thermoplastic elastomer) or TPV (thermoplastic vulcanizate). A considerable number of patents applications have been published showing many different uses of these solid compound blends, including US 2009/0239014 A1, US 2009/0214861, US 2009/0176045 A1, US 2008/0009588 A1, US 2006/0178478 A1 and US 2006/0199917 A1. Nevertheless, the number of publications on colloidal dispersions of solid compound blends including rubber and plastic is very limited. This applies even more with respect to aqueous dispersions thereof. For example, JP 2008038057 A describes an adhesive derived from an aqueous dispersion containing a rubber component, tackyfying resin and a plasticizer. Furthermore, an aqueous polyolefin dispersion, its production method and its use as a coating or film material is disclosed in US 2007/0292705 A1.

In view of the above prior art, it is an object of the present invention to provide aqueous dispersions that, e.g., can be adapted to the requirements for using as plasticizer-free sprayable sealants for the lids of especially non-metallic vessels intended for contact with foodstuffs such as glass pots, plastic pouches, and others. In particular, there is a need for a gasket which is capable of guaranteeing the packaging tightness, by showing the required mechanical properties for opening and closing the container as well as having very low levels of migration into the food. Moreover, the formulation should have no content or a negligible content of volatile organic compounds (VOCs) and may have a high ratio of natural or renewable raw materials. This can be achieved according to the present invention, which relates to water-based dispersions of blends of non-thermoplastic elastomers and thermoplastics polymers.

### Summary of the invention

The present invention relates to a water-based dispersion comprising a) a water-based medium, b) a dispersing agent, and c) a blend of a thermoplastic polymer and a non-thermoplastic elastomer as a dispersed phase.

In one embodiment, the dispersing agent may be selected from at least one of clays such as bentonites, natural gums, salts or esters of fatty alcohols or fatty acids, milk or vegetable casein and derivatives thereof, polysaccharides, alginates, zinc soaps, tri-sodium phosphate, and other emulsifiers. In a preferred embodiment, the dispersing agent is milk casein or vegetable casein. According to one aspect of the invention, the dispersion comprises from about 8 to 30% by weight of dispersing agent based on the total weight of the blend of thermoplastic polymer and non-thermoplastic elastomer. In a preferred embodiment, the dispersion comprises from about 12 to 20% by weight of dispersing agent based on the total weight of the blend of thermoplastic polymer and non-thermoplastic elastomer.

In one embodiment according to the present invention, the non-thermoplastic elastomer is selected from at least one of natural rubber, polybutadiene (BR), styrene butadiene rubber (SBR), nitrile rubber (NBR), hydrogenated nitrile rubber (H-NBR), acrylic rubber (ACN), butyl rubber (IIR), brominated butyl rubber (BIIR), chlorinated butyl rubber (CIIR), polyester urethane rubber (AU), epichlorohydrin homopolymers (CO), epichlorohydrin copolymers (ECO), polychloroprene (CR), ethylene acrylic rubber (EAM), polyether urethane rubber (EU), fluoro rubber (FKM), and fluoro silicone rubber (FVMQ). In a preferred embodiment, the non-thermoplastic elastomer is SBR, NR or NBR.

In one embodiment, the thermoplastic polymer is selected from polyolefins, vinyl polymers, polyamides, polyesters, polyethers, polyacetals, polycarbonates, and polyurethanes. In a preferred embodiment, the thermoplastic polymer is a polyolefin, more preferably is a polyethylene and/or polypropylene.

In one embodiment, the weight ratio of non-thermoplastic elastomer to thermoplastic polymer is from about 95:5 to 20:80, preferably from about 90:10 to 40:60, and more preferably from about 85:15 to 60:40.

In another embodiment, the dispersion of the invention may further comprise an additive selected from at least one of inorganic fillers, organic resins, pigments, curing agents, anti-degradants, processing aids, slipping agents, foaming additives, thickeners and surfactants. Preferably, the dispersion comprises a slipping agent, such as natural or synthetic waxes, siloxanes etc., and thickeners and surfactants.

That is to say, the dispersion according to the present invention comprises in a preferred embodiment at least a surfactant and a thickening agent. Preferably, the thickening agent is included in an amount so as to provide a Brookfield viscosity in the range of from about 100 to 100000 mPa·s, more preferably from about 1000 to 10000 mPa·s, still more preferably from about 1000 to 1500 mPa·s. Furthermore, in a preferred embodiment, the thickening agent is included in an amount of from about 0.2 to 50% by weight based on the combined weight of the thermoplastic polymer, non-thermoplastic elastomer, dispersion medium and dispersion agent. The thickening agent may preferably be selected from at least one of agar-agar, carageenan, tragacanth, gummi arabicum, alginates and derivatives of alginic acid, pectines, polyoses, guar gum, locust bean gum, starch, dextrins, gelatin, carboxymethyl cellulose, hydroxyethyl cellulose, hydroxypropyl cellulose, polyacryl and polymethacryl compounds, vinyl polymers, polycarbonates, polyethers, polyimines, polyamines, polysilicic acids, clay minerals, natural gums, and urethanes; more preferably the thickening agent is selected from at least one of carboxymethyl cellulose, hydroxyethyl cellulose, hydroxypropyl cellulose, alginates and derivatives of alginic acid, clay minerals, and polyacryl and polymethacryl compounds.

Moreover, the surfactant may be present in an amount of from about 0.1 % to 10% by weight based on the combined weight of the thermoplastic polymer, non-thermoplastic elastomer, dispersion medium and dispersion agent. The surfactant may preferably be selected from at least one of cationic, anionic, non-ionic or amphoteric surfactants, including alkylbenzene sulfonates, alkane sulfonates, fatty alcohol sulfonates, fatty alcohol ether sulfates, α-olefm sulfonates, α-ester sulfonates, alkyl phosphates, alkylether phosphates, alkylammonium compounds, imidazolinium compounds, fatty alcohol ethoxylates, alkylphenol ethoxylates, fatty amine ethoxylates, fatty acid ethoxylates, fatty acid ester ethoxylates, alkanolamines, aminoxides, and N-(carboxymethyl)-imidazolinium betaines.

The present invention also provides a method for the manufacture of the above dispersion. The method comprises at least the following steps (but may of course include additional methods steps): (a) providing a homogeneous blend of a thermoplastic polymer and a non-thermoplastic elastomer; and (b) adding alkaline water-based medium to the blend and dispersing the blend in the medium in the presence of a dispersing agent.

In one embodiment, inorganic filler is added to the solid blend of thermoplastic polymer and non-thermoplastic elastomer in an amount of from about 12 to 150 parts by weight, based on 100 parts of the combined weight of thermoplastic polymer and non-thermoplastic elastomer. In a preferred embodiment, from about 25 to 125 parts by weight of inorganic filler are used. In a further preferred embodiment, the inorganic filler is selected from the group of least one of carbon black, carbonates, including calcium carbonate, silicates, including silica, talc, clay, calcium sulphates, barium sulphates, alumina.

According to one embodiment, the water-based medium is used in an amount of from about 80 to 350 parts by weight, based on 100 parts of the combined weight of thermoplastic polymer and non-thermoplastic elastomer. In a preferred embodiment, from about 100 to 200 parts by weight of water-based medium are used.

The method according to the present invention may further comprise a step of adding one or more additives to the waterbased dispersion of the blend of thermoplastic polymer and non-thermoplastic elastomer. The additives are preferably selected from at least one of inorganic fillers, organic resins, pigments, curing agents, anti-degradants, processing aids, slipping agents (such as natural or synthetic waxes, siloxanes etc), foaming additives, thickeners and surfactants, more preferably at least one of thickeners and surfactants.

The dispersion may be used in one embodiment for providing a sealant. For example, a dispersion in accordance with the present invention may be used as a sealant by applying the dispersion into the perimeter of a lid, drying the dispersion at a temperature of from about 25°C to less than 100°C, preferably from about 60 to 90°C, and subsequently curing at a temperature of from about 100°C to 200°C, preferably from about 130 to 170°C. In a preferred embodiment, drying may be carried out at a temperature of from about 60 to 90°C. In a further preferred embodiment, curing may be carried out at a temperature of from about 130 to 170°C. In another preferred embodiment, the dispersion is applied to the perimeter of a lid by spraying or injection (without forced air). It is also preferred in this respect that the dispersion comprises a slipping agent.

The dispersion in accordance with the present invention may also be used as a sealant applying the dispersion into a package or container. Thus, a sealant layer is obtained. In a preferred embodiment, the dispersion may be sprayed into the package or container. The dispersion may be applied for example by spraying or injection (without forced air).

The present invention also relates to a lid comprising a sealant derived from the above dispersion according to the invention. The lid may be a metallic lid.

Furthermore, the invention relates to a package or container comprising a sealant derived from the above dispersion according to the invention.

### Detailed Description

The term "php" is used in the present invention as acknowledged in the art. That is to say, the term means "parts by weight per hundred parts of polymer", which in the case of the present invention reads: "parts by weight per 100 parts of the combined weight of thermoplastic polymer and non-thermoplastic elastomer", i.e. the blend used.

The term "water-based medium" refers herein to a liquid dispersion medium mainly and preferably consisting of water. However, the water-based medium according to the invention may include minor amounts of up to 10% of other solvents miscible with water such as, e.g., alcohols. In a preferred embodiment, the water-based medium according to the invention is, however, free of solvents other than water, i.e., the water-based medium in such cases is an aqueous medium consisting essentially of water or consisting of water.

The term "dispersing agent" refers herein to a conventional agent used in the art for stabilizing (either electrically or sterically) colloidal particles in a water-based medium. Dispersing agents (dispersants) used in the current invention are additives incorporated to 2 phase systems (dispersions, suspensions, emulsions...) and acting in the interface in order to improve the kinetic stability of the colloidal/suspended particles by creating a steric and/or electrostatic balance with the dispersing media. Dispersants in the above sense act similarly to emulsifiers, de-flocculants or stabilisers. Typical examples of such dispersing agents include salts and amphiphilic substances. Typical dispersing agents known in the art and suitable according to the present invention include clays such as bentonites, natural gums, salts or esters of fatty alcohols or fatty acids, milk or vegetable casein and derivatives thereof, polysaccharides, alginates, zinc soaps, tri-sodium phosphate, and other emulsifiers. As acknowledged in the art, caseins are phospholipid proteins found in milk and some vegetables, for example in soybeans. A commercially available example of vegetable casein is Pro-Cote^{®} by DuPont.

The term "non-thermoplastic elastomer" according to the present invention refers to any typical elastomer or rubber excluding those that are known in the art as thermoplastic elastomers. A typical thermoplastic elastomer excluded according to the present invention is ethylene propylene diene monomer rubber (EPDM). Typical examples of non-thermoplastic elastomers known in the art and suitable according to the present invention include natural rubber (NR), polybutadiene (BR), styrene butadiene rubber (SBR), nitrile rubber (NBR), hydrogenated nitrile rubber (H-NBR), acrylic rubber (ACN), butyl rubber (IIR), brominated butyl rubber (BIIR), chlorinated butyl rubber (CIIR), polyester urethane rubber (AU), epichlorohydrin homopolymers (CO), epichlorohydrin copolymers (ECO), polychloroprene (CR), ethylene acrylic rubber (EAM), polyether urethane rubber (EU), fluoro rubber (FKM), and fluoro silicone rubber (FVMQ). Thermoplastic polymers are normally difficult to incorporate into non-thermoplastic elastomers due to elastomer's lack of melting ability. Blends of thermoplastic polymers and non-thermoplastic elastomers as well as water-based dispersions thereof can be prepared as described herein. The terms "rubber" and "elastomer" are used in the present description interchangeably. A plasticizer in the sense of the present invention is an additive used to increase the plasticity or fluidity of plastic materials, i.e. to lower the glass transition temperature (Tg) thereof. They are normally embedded inside the polymer chains increasing the free volume available and are easily extractable in oily/fatty media. Such plasticizers are typically migratable and may cause contamination of goods such as foodstuff contacting material containing plasticizers. The use of plasticizers is not necessary according to the present invention, in contrast to sprayable sealant materials known in the art. Typically, the dispersions of the present invention and materials derived therefrom are free of plasticizers as defined above. In particular, the following materials are typically not included in the compositions and dispersions according to the present invention: phthalates such as benzyl butyl phthalate (BBP), butyl octyl phthalate (BOP), dihexyl phthalate (DHP), diheptyl phthalate (DIHP), dioctyl phthalate (DOP), diisooctyl phthalate (DIOP), dicapryl phthalate (DCP), diisononyl phthalate (DINP), diisodecyl phthalate (DIDP), diisoundecylphthalate (DIUP), undecyl dodecyl phthalate (UDP), diisotridecyl phthalate (DTDP), etc.; linear phthalates such as dibutyl phthalate (DBP), di(C₇, C₉) phthalate (79P), etc., trimellitates such as tris-(isononyl)-trimellitate (TINTM), tris-(isooctyl)-trimellitate (TIOTM), tris-(2-ethylhexyl)-trimellitate (TOTM) etc., aliphatic dicarboxylate esters such as adipates including e.g. dioctyl adipate (DOA), diisooctyl adipate (DIOA), diisononyl adipate (DINA), etc., organic esters of phosphoric acid such as isodecyl diphenyl phosphate (DDP), tri(2-ethylhexyl) phosphate (TOF), trikresyl phosphate (TCP), or epoxidized fatty acid derivatives such as epoxidized soybean oil (ESO), 2-ethylhexyl epoxy tallate (OET), etc., and others such as di(2-ethylhexyl) terephthalate, or diisononylcyclohexane-1,2-dicarboxylate (DINCH).

In connection with plastic materials, the term "compound" refers to a mixture of polymers and additives, in particular a homogeneous (non-particulate) blend thereof. Thus, when referring to plastic materials, the term "compound" is used as acknowledged in the art. In the present application, the terms "blend", "solid blend", "homogeneous blend", "compound", "compounded blend", "masticated blend", etc. are basically used synonymously to refer to the solid material that may be obtained by a process such as in Step A as defined below. This material is a substantially homogeneous blend (compound) of a thermoplastic polymer and a non-thermoplastic elastomer, optionally including additives. Such a homogeneous blend is preferably obtained by applying mechanical forces to a mixture of its constituents such as kneading.

The term "mastication" is conventionally used in the field of rubber processing and refers to the treatment of rubber material especially by kneading at preferably low temperatures in order to plasticize the material and to reduce the viscosity thereof. In rubber processing, Step A as further defined below may be referred to as mastication or calendering. In addition, polymer compounding refers to modification of material properties through the addition of additives. These additives may incorporate According to the present invention Steps A, B and C as defined below.

The objects underlying the present invention can be solved by the provision of a water-based dispersion as described in further detail below.

An especially preferred field of application of the water-based dispersion of the present invention is their use in sealant compositions. Thus, in the following, the present invention is explained with specific reference to sealant materials. A sealant composition in accordance with the present invention may be provided by a compounded non-thermoplastic rubber/thermoplastic polymer material. The blend of non-thermoplastic elastomers and thermoplastic polymers includes the thermoplastic polymers in variable concentrations from 5 to 80% by weight of the total weight of polymers (rubber + thermoplastic), preferably 10 to 60% by weight and particularly preferably 15 to 40% by weight.

The non-thermoplastic elastomer (rubber) is as defined above. Rubbers are commonly used in the form of bales or crumbs.

The thermoplastic polymer is represented by different plastic materials (including thermoplastic elastomers), preferably different grades of polyolefins, vinyl polymers, polyamides, polyesters, polyethers, polyacetals, polycarbonates, and polyurethanes. More preferably, the thermoplastic polymer is a polyolefin, and even more preferably is a polyethylene and/or polypropylene. The above polymer blend is typically compounded with some conventional components, including for example:
a) Inorganic fillers, such as defined above, especially carbon black, calcium carbonate, kaolin, talc, barites, clays, etc; typically in an amount of from 12 to 150 parts by weight per hundred parts of polymer (php), preferably 25 to 125 php;
b) Organic resins (commonly in the form of pellets or flakes), such as hydrocarbon resins, rosin, colophony, terpenic resins, phenolic resins, acrylic resins, urea resins, alkyd resins, epoxy resins, melamine resins, polyester resins, polyurethane resins, ketone resins, cumaron indene resins, isocyanate resins, or polyamide resins etc.; typically included in an amount of 0 to 100 php, preferably 15 to 60 php;
c) Processing oils such as naphthenic or aliphatic oils; ranging from 0 to 75 php, preferably 5 to 40 php. Such processing oils (also known as softeners or lubricants) reduce friction and wear with mechanical parts of the equipment during the rubber mastication process.
d) Pigments, including natural pigments and synthetic inorganic and organic pigments, such as iron oxides, titanium oxides, carbon black, etc; in an amount of 0 to 75 php, preferably 0 to 40 php;
e) Curing agents, such as zinc oxide, sulfur, etc; usually in an amount of 0 php to less than 25 php;
f) Other conventional additives such as anti-degradants such as anti-oxidants, or biocides, processing aids such as peptizisers (Zn soaps, phenylamines,), etc; usually in an amount of 0 php to less than 10 php.

### Step A: Blend of non-thermoplastic elastomer and thermoplastic polymer

In an exemplary and preferred embodiment, the compounding is made in an internal mixer, comprising an enclosed chamber and two (or three) rotors with small clearance between them and the enclosing wall. The rotors usually rotate in opposite directions, and optionally may rotate at different speeds. The temperature of the mixing chamber can be controlled by conventional means such as circulating cold water, water steam or some other fluid, like cold/hot oil, etc.

In an illustrative embodiment, the process usually starts by blending the polymers (non-thermoplastic elastomer (rubber) and thermoplastic polymers), while the rest of the components (additives) is added in a second or third stage. The compounding process can take from about 5 to 30 minutes, more commonly from about 8 to 20 minutes, at temperatures ranging, e.g., from 60°C to 200°C, preferably from 110°C to 170°C.

According to the present invention, non-thermoplastic elastomers are masticated in solid state, i.e., not in molten state. The thermoplastic polymers and the optional organic resins are typically added also in solid state and may or may not be melted during the kneading process. Thus, a masterbatch is obtained that can be further processed by dispersing as described in detail below.

In an exemplary embodiment, the compounded blend is subsequently dropped at elevated temperature from the internal mixer, typically as a bulk mass of the compounded blend, and then allowed to cool down. The thus obtained masterbatch may have different colours depending on the used pigments, most common are gray or white, and the bulk mass may be used as it is or suitably broken up into parts. Preferably, the surface from a cut of the blend should be uniform, except for the entrapped air. When it is dissolved in a solvent, for example toluene, a complete solution should be obtained without lumps or insoluble particles.

### Step B: Aqueous dispersion of the blend comprising non-thermoplastic elastomer and thermoplastic polymer

The solid compounded blend obtained above in Step A is brought to liquid state by dispersing in alkaline aqueous media. The process basically follows the general method described in the reference 'Latex in Industry' cited above, as outlined in the following.

The compounded blends of non-thermoplastic rubbers and thermoplastic polymers are mixed with increasing amounts of alkaline water and other ingredients, including in preferred embodiments:
a) Water (about 80 to 350 php, preferably 100 to 200 php) made alkaline with some common alkaline substances, such as sodium, potassium or ammonium hydroxide, secondary or tertiary amines, salts of phosphoric or carbonic acid, etc. is added to the solid blend;
b) In parallel, from about 8 to 30 php, preferably from 12 to 20 php of some dispersing and stabilising agents are incorporated. These agents may be selected from clays such as bentonites, natural gums, salts or esters of fatty alcohols or fatty acids, milk or vegetable casein and derivatives thereof, polysaccharides, alginates, zinc soaps, tri-sodium phosphate, and other emulsifiers such as sulphenamides, acrylamides, lecithin and proteines, and wherein the dispersing agent is preferably milk casein or vegetable casein;
c) Optionally, some thermosetting resins (in an amount ranging from about 0 to 80 php, more conveniently up to 40 php) can be added, either in solid or in liquid form. Incorporation of solid organic resins as already mentioned above in connection with the provision of the solid blend should be made during the earliest processing stages, while the addition of liquid resins can be done at this stage of adding alkaline water. Typical and illustrative liquid organic resins include hydrocarbon resins, rosin, colophony, terpenic resins, phenolic resins, acrylic resins, urea resins, alkyd resins, epoxy resins, melamine resins, polyester resins, polyurethane resins, ketone resins, cumaron indene resins, isocyanate resins, or polyamide resins etc.;
d) Optionally, conventional curing accelerators (typically about 0 to 50 php, preferably 1 to 10 php) can be used either to crosslink the rubber itself or the incorporated resins. Examples thereof include ditiocarbamates, ditiophosphates, thiazols, thiurams, mercaptanes, sulfonamides;
e) In an illustrative embodiment, the formulation may be completed with small amounts of conventional biocides, antioxidants and other preservative constituents like sodium nitrites and nitrates, sulfites, disodium EDTA, calcium proprionate, ethanol, isothiazolines, benzoic acid and its salts e.g., in an amount from about 0 to 3 php.

In an illustrative embodiment, the dispersing step may be carried out in a two-Z-blade dispersion mixer enclosed in a double-jacket chamber. The rotors usually rotate in opposite directions and at different speeds. The process temperature can be controlled by circulating some fluid (typically water or oil) through blades and the double-jacket of the chamber.

The process typically starts at solid state kneading the masterbatch obtained above in Step A at low rotation speed with other components and gradually adding small aliquots of (alkaline) water, which is initially absorbed by the compounded polymer. The Z-blades rotation causes continuous stretching and folding of the polymer mass which help the introduction of water and dispersing agents through the globular interfaces of the polymer particles, facilitating the dispersion of such particles in solid state (without polymer melt). As the chunk become softer, the rotation speed can be gradually increased as well as the volume of the added water aliquots. The addition of water's continue until a phase inversion takes place and water becomes the continuous phase and the polymer particles turn into the colloidal dispersed phase. Subsequently, other liquid components can be added and the viscosity of the dispersion is controlled by additional amounts of water. The whole processing time can vary, e.g., from about 0.5 hours (h) to 4 h, preferably 1 to 3 h, and the process can be carried out at temperatures varying from room temperature (20°C) to about 80°C, preferably 50 to 75°C.

At this stage, the aqueous dispersion of colloidal particles of non-thermoplastic rubber and thermoplastic materials is achieved. Typical batch sizes are 100 to 600 kg, usually between 250 and 500 kg. To complete the process, it is preferred to sieve the dispersion in order to remove pieces which eventually have not been dispersed, and to transfer the dispersion to another vessel and to remove the air bubbles entrapped during the dispersion process, e.g. by slow rotation with a standard rotational stirrer. Optionally, some conventional defoamer could be added.

A colloidal dispersion obtained in such a way contains about 20 to 60% by weight of solids, the preferred solids content ranges from about 40 to 55% by weight, based on the total weight of the dispersion. Furthermore, the dispersion typically has a pH of about 9 to 12 (preferably 10 to 11). In some embodiments, a pH lower than 8 may cause dispersion instabilities. The fineness of grind of the dispersion can be checked either visually by extending a fine layer of the liquid on a flat surface or preferably by using a grindometer (EN 21524, ISO 1523). The applied layer should be uniform, without coarse particles or lumps. Dispersed particle size (D50), measured by using a laser diffractometer typically ranges from about 1 to 25 µm, more typically 5 to 15 µm, usually showing a broad particle size distribution (sometimes, the particle size distribution may even include two or more peaks).

Depending on the nature and characteristics of the ingredients, as well as on the processing parameters, the aqueous polymer dispersion obtained in Step B can be further optimized and formulated to be applied by different technologies, such as rolling, spreading, flow coating, printing, dipping, dye lining, spraying, injection, etc., on different substrates, such as flexible or rigid, metallic, plastic, paper or cardboard, textile, concrete, etc., for many different uses, such as, e.g., adhesives, coatings, paints, inks, sealants, expansion joints, and others.

The following preferred embodiment explains the illustrative details of formulating the dispersion obtained in Step B as a sealing compound for food packaging.

### Step C: Formulating the dispersion obtained in Step B as sealing compound

The water-based dispersion obtained in Step B can in an illustrative embodiment be formulated with some of the following components:
a) Natural or synthetic latexes, optionally in an amount up to 200% by weight based on the weight of the dispersion obtained in Step B, more preferably up to 50% by weight of dispersion B. Conventional latex curing agents could also be required. Typical examples include sulphur systems, carbamates, thiurams, peroxides, metallic oxides or urethane crosslinkers. A suitable natural latex is any kind of natural latex, such as standard, high solids, pre-vulcanised, low ammonia, hypoallergenic, etc. A suitable synthetic latex includes different kinds of synthetic elastomers dispersed in aqueous media.
b) Optionally, slurries of fillers or pigments can be added to increase the solids content of the dispersion, if required. Suitable fillers and pigments are e.g., those already mentioned above in Step A. Such slurries can be used in an amount up to 100% by weight, based on the weight of the dispersion obtained in Step B, preferably up to 40% by weight.
c) Resins may be optionally added in the form of either dispersions or emulsions. Suitable resins have already been described above in connections with Step B.
   The amount is typically up to 100% by weight based on the weight of the dispersion obtained in Step B, preferably is up to 50% by weight. In some cases, the use of a specific resin may imply to further add a specific crosslinking substance for that resin.
d) Conventional additives such as stabilisers, dispersants, preservatives, defoamers and other minor components may be optionally added, typically in an amount of less than 20% by weight, based on the weight of the dispersion obtained in Step B.
e) At this stage, specific additives can be added to optimize the dispersion for specific applications. Such additives, when present, are typically included in small quantities such as from 0 to 5% by weight. Examples thereof include slipping agents, such as natural and synthetic waxes, and siloxanes, etc. Further examples include conventional foaming additives, such as chemicals which decompose thermally producing small gas bubbles like sodium or calcium bicarbonates or micro-particles of encapsulated gas which expand their volume when heated, such as alcohols encapsulated in soft polymer shells. For example, a slipping agent is added if a sealant is to be used in twist-off caps but is typically not added in other types of packages.
f) The final properties of the products, specific for the intended application technology, are achieved by adding an appropriate amount of rheological and surface additives. Such additives include cationic, anionic, non-ionic or amphoteric surfactants, such as alkylbenzene sulfonates, alkane sulfonates, fatty alcohol sulfonates, fatty alcohol ether sulfates, α-olefin sulfonates, α-ester sulfonates, alkyl phosphates, alkylether phosphates, alkylammonium compounds, imidazolinium compounds, fatty alcohol ethoxylates, alkylphenol ethoxylates, fatty amine ethoxylates, fatty acid ethoxylates, fatty acid esterethoxylates, alkanolamines, aminoxides, and N-(carboxymethyl)-imidazolinium betaines. A typical amount thereof is up to 20% by weight, based on the weight of the dispersion obtained in Step B. A further example of such additives to adjust the final properties are thickening agents. A broad variety of thickening agents are suitable in the context of the present invention, including agar-agar, carageenan, tragacanth, gummi arabicum, alginates and derivatives of alginic acid, pectines, polyoses, guar gum, locust bean gum, starch, dextrins, gelatin, carboxymethyl cellulose, hydroxyethyl cellulose, hydroxypropyl cellulose, polyacryl and polymethacryl compounds, vinyl polymers, polycarbonates, polyethers, polyimines, polyamines, poly silicic acids, clay minerals, natural gums, and urethanes; more preferably the thickening agent is selected from carboxymethyl cellulose, hydroxyethyl cellulose, hydroxypropyl cellulose, alginates and derivatives of alginic acid, clay minerals, and polyacryl and polymethacryl compounds. The amount thereof is usually 0.2 to 50% by weight, based on the weight of the dispersion obtained in B.

Compounding can be carried out, e.g., with standard rotational stirrers at temperatures varying from room temperature to 60°C, in most cases preferably at room temperature. Mixing should usually be done in such a way tot allow homogenization of the whole product but avoiding the entrapments of the air bubbles. Depending on the stirring equipment, batch size and the characteristics of the ingredients and the final product, the process can take from 1 h to 1 week, typically 1 to 3 days for batches of more than 2 tons.

The final dispersion obtained in Step C may have the following illustrative properties depending on the application technology:
a) Solid content, ranging from 20 to 90% by weight based on the final dispersion; typically 30 to 70% by weight.
b) A specific viscosity. Different lining technologies may require different viscosity values from 100 to 100000 mPa·s. A preferred range varies with lining technology, for example, for applying by spraying, e.g., with an injection gun on substrates such as rotating round lids, the preferred range could be 1000 to 1500 mPa·s. In such spray applications, the liquid product is forced (usually pumped or by pressured air) to pass through a nozzle, having a hole of typically 0.4 to 2 mm diameter, to provide a thin layer of wet product on the perimeter of the rotating lids. The viscosity is commonly measured with rotational viscometers, but other equipment can also be used; typically a Brookfield viscometer at 60 rpm with needle 3 (lv3) or 4 (lv4). In the context of the present invention the temperature for determining the viscosity is 25°C (ASTM D2196).
c) A specific mechanical stability (measured according to ASTM D1076 or D 1417). The compound is submitted to different mechanical and thermal stress during product preparation and the application process. The product should resist such stress without significant coagulation. This can be achieved, e.g., by applying high rpm speeds to the dispersion, thus destroying the kinetic stability of the dispersed/suspended particles and generating irreversible aggregation of the colloids. The test on mechanical stability measures the time until aggregation.
d) A specific dispersion stability. The dispersion should be stable, or at least easy to re-build, during its self life (usually up to 12 or 24 months).
e) A specific surface tension. The surface energy should be appropriate to wet the substrate. There are different technologies available to measure surface tension.
   When a dilution of 10 wt % of the final product clanse round may be conventionally measured using a Wilhemy plate tensiometer, the measured surface tension varies from 25 to 50 dyn/cm. Some specific substrates could require specific surface tension values. For example, in the case of lubricated substrates, coatings designed to have slipping properties, surface tension should go below 30 dyn/cm.
f) A specific sieving residue, preferably zero or negligible sieving residue when sieving through 100 or 300 microns filter. This may be achieved, for example, by mechanically sieving one litre of dispersion without forced pressure (atmospheric conditions).

It is understood that in the case of products for use with food, all ingredients employed in Steps A to C must be approved for the use in materials intended to be in contact with foodstuff, following relevant international legislation, such as the European directives mentioned above.

### Step D: Illustrative application of the dispersion obtained in Step C as a sealant

The liquid product obtained in Step C may be applied in the perimeter of round lids with injection guns as outlined above and other standard equipment in the industry. For example, applying the dispersion may be carried out by spraying or injection (without forced air). Thus, the same equipment can be used as used in connection with conventional plasticized PVC organosols (now obsolete in view of International legislation).

The compound should then be dried at low temperature such as 25°C to less than 100°C, preferably 60 to 90°C, allowing the evaporation of water without causing irregularities on the film surface. Once dried, the compound is cured at temperatures from about 100 to 200°C (preferably 120 to 170°C) for e.g., 1 to 20 minutes (preferably 2 to 10 minutes).

Lids lined with the liquid compound as described above can be used to seal, e.g., non-metallic packages filled with dry, aqueous or fatty foods, independently of the filling process or post-treatment given to the food, such as pasteurization, hot filling or sterilization.

A pot closed in such conditions maintains the tightness and vacuum, the appropriate mechanical properties to open and close the package and low migration levels.

### Examples

In the following, details of the present invention will be illustrated more specifically by way of working examples and comparative examples. The examples show some advantages of the products according to the invention when used as sealants suitable for liquid application, more specifically, when used as sealing gaskets to seal containers.

The following data are given as examples for illustrative purposes and in any case should not be construed as limiting the present invention. In the examples, all indications in percent refer to percent by weight unless explicitly indicated otherwise.

### Example 1 (according to the invention)

This example shows a new product according to the invention prepared under the procedure described herein. The example relates to a water-based dispersion of a non-thermoplastic elastomer and a thermoplastic polymer formulated as a liquid aqueous plasticizer-free sealant, to form sealing gaskets of lids to non-metallic packages with low overall migration.

A blend of polypropylene (PP) - styrene butadiene rubber (SBR) is prepared in an internal mixer as described in Step A above, having a weight ratio PP/SBR of 2/5. The PP grade used has a melting point of 160°C, a density of 0.890 g/cm³ and a melt flow rate of 8.0 g/10 min (230°C/2.16 kg). Furthermore, 61% of this blend are compounded with 10% of pine tree resin (such as dertolyne), 25% of calcium carbonate, 3% of naphthenic oil (such as nynas) and less than 1% of a hindered phenol antioxidant (such as wingstay L). The above-described ingredients are commercially available.

The compounded PP/SBR (48%) is brought into liquid state by dispersing with 9% of Zn soap of ammonium benzoate, 4% of natural casein, such as casein of the type cow milk 30 mesh, 0.5% of an alkaline phosphate salt, such as tri-sodium phosphate, 0.5% of a sulphur donor accelerator, such as mainly dithiocarbamates, and 38 % of alkaline water, made alkaline e.g. with ammonia or ammonia benzoate.

Then, 42% of the obtained PP/SBR aqueous dispersion (stabilized with 3% of a hydroalcoholic solution of sodium dodecylsulphate) is mixed with 10% of acrylic resin (aqueous dispersion), 40% of slurry of titanium dioxide with kaolin, less than 3% of a triamine/oxalic acid compound and less than 1% of vegetal secondary amide wax such as erucamide.

The formulated PP/SBR aqueous dispersion is adjusted with thickener solutions of acrylic copolymers (around 1%) and ammonium alginate (around 5%) to obtain the required viscosity and solid content as can be seen from the table below.

The product is applied at room temperature with a sealant injection gun as outlined above on the interior perimeter of the metallic lids. It is dried at low temperature to allow water evaporation and cured at 150°C for 3 minutes. Compound weight per lid is adjusted to produce a ring sealing gasket of 0.7 to 1.3 mm thickness and 1 g weight.

The lined ends obtained by this procedure are used in contact with different filling goods and thermal treatments processes like pack hot-filled, pasteurized and sterilized aqueous and fatty food in glass jars, filled and closed under steam flow. Hot-filling is carried out by filling the container with a hot filling good and closing with or without vapour stream. After cooling, a vacuum inside the container is generated. Pasteurization is carried out by submitting the filled and closed container to a thermal treatment at 100°C for an appropriate time. Sterilization is carried out after filling and closing by submitting the container to a thermal treatment at temperatures higher than 100°C applying pressure to compensate the container internal pressure generated by the high temperature. An aging pack test is conducted with fish in olive oil sterilized under standard industrial conditions at 115°C for 1 h applying 1.4 bar of pressure. The above test is an industrial standard method. The sterilisation parameters depend on the nature of the product and the size of the package. The above-mentioned parameters are for 250 g of fish in oil. Aging test description: package samples are stored at controlled temperatures and a set of characteristics of the packaged product is measured at a certain time (such as taste, pH, odour, pollution, vacuum, opening torque, etc.). For example, fish in oil was stored at 37 °C and 45 °C; samples at 37°C were used to determine biological growth and samples at 45 °C were used to determined physical and organoleptic properties; it is assumed that 1 day at 45°C represents 15 days at room temperature. Opening torques were measured according to ASTM D2063.

### Example 2 (comparative)

In the present comparative example, 38% of natural prevulcanized latex (stabilized with 1% of a hydroalcoholic solution of sodium sulphosuccinate) is mixed with 19% of liquid styrene-acrylic resin (aqueous dispersion), 40% of slurry of titanium dioxide with talc and less than 3% of TMTD, ZDBC, DAP and siloxane wax.

The formulated dispersion is adjusted with thickener solutions of acrylic copolymers (around 1%) and hydroxymethylethylcellulose (around 6%) to obtain the required viscosity and solid content.

The product is applied at room temperature with a sealant injection gun as described above on the interior perimeter of the metallic lids. It is dried at low temperature to remove the water and cured at 170°C for 2 minutes. Compound weight per lid is adjusted to produce a seal gasket of 0.7 to 1.3 mm thickness and 1 g in weight.

The lined ends are used to pack pasteurized and sterilized aqueous and fatty food in glass jars, filled under steam flow. An aging pack test is conducted with fish in olive oil sterilized under industrial conditions described.

### Example 3 (comparative)

Following the procedure described herein but without the incorporation of a thermoplastic polymer to the blend, 61% of styrene butadiene rubber is compounded with 7% of pine tree resin, 25% of calcium carbonate, 6% of naphthenic oil and less than 1% of a hindered phenol antioxidant.

The compounded SBR (48%) is brought into liquid state by dispersing with 9% of Zn soap of ammonium benzoate, 4% of natural casein, 0.5% of an alkaline phosphate salt (such as tri-sodium phosphate), 0.5% of a sulphur donor accelerator (such as thiocarbamate) and 38% of alkaline water (such as ammonia).

Subsequently, 42% of the SBR aqueous dispersion (stabilized with 3% of a hydroalcoholic solution sodium dodecylsulphate) is compounded with 10% of acrylic resin (aqueous dispersion), 40% of slurry of titanium dioxide with kaolin, less than 3% of a triamine/oxalic acid compound and less than 1% of vegetal secondary amide wax such as erucamide.

The SBR formulated dispersion is adjusted with thickener solutions of acrylic copolymers (around 1%) and ammonium alginate (around 5%) to obtain the required viscosity and solid content as shown in the following table.

The product is applied at room temperature with a sealant injection gun as described above on the perimeter of the metallic lids. It is dried at low temperature to remove the water and cured at 150 °C for 5 minutes. Compound weight per lid is adjusted to produce a seal gasket of 0.7 to 1.3 mm thickness and 1 g in weight.

The lined ends are used to pack pasteurized and sterilized aqueous and fatty food in glass jars, filled under steam flow. Aging pack test is conducted with fish in olive oil sterilized under industrial conditions described above.

The following table 1 shows some characteristics of the products from Examples 1-3, as well as some data regarding the performance as packaging seal. The tests were carried out under the following conditions:
1v4: Brookfield viscometer configuration LV and spindle number 4; Shear thinning: ASTM D2196 (=viscosity); Film density: volume of a determined mass of the sealant gasket;

Particle size is measured by laser diffraction of the diluted sealant dispersion, using e.g. Mastersizer from Malvern; Mechanical stability is measured according to ASTM D1076 or D1417; Water adsorption: dry sealant gasket is immersed into water for one hour at room temperature; the weight increase is determined after wiping off the water adhered to the gasket surface; Resistance to food carriers: dry sealant gasket is immersed into food carriers (mainly water and oil) at room temperature and high temperature (boiling water and oil at 120°C), then the film resistance is determined by rubbing the gasket surface; Adhesion: the sealing compound is applied into a coated tinplate strip and dried and cured at appropriate temperatures (in the examples herein: 5 minutes at 150 °C), the adhesion is the force needed to peel of the dry film from the surface of coated tinplate (Peel tester from Imass); the obtained result is divided by the film width (in meters); Viscoelasticity of the film is determined with DMA equipment at different temperatures in dynamic shear mode applying an amplitude of 2µm at 1Hz frequency; Overall migration was carried out according EU legislation; Aging test: package samples are stored at controlled temperatures and a characteristics of the packaged product are measured after certain time periods of (like taste, pH, odour, pollution, vacuum, opening torque, etc.). For example, fish in oil was stored at 37 °C and 45 °C; samples at 37 °C were used to determine biological growth and samples at 45 °C were used to determined physical and organoleptic properties; it is assumed that 1 day at 45 °C represents 15 days at room temperature; Opening torques are measured with an opening torque tester according to ASTM D2063.

**Table 1:**

| | **Example 1** | **Example 2** | **Example 3** |
|---|---|---|---|
| **Solids Content** | 61% | 62% | 60% |
| **Particle size (D50) (**µ**m)** | 11 | 1 | 6 |
| **Brookfield Viscosity (mPa·s)** | 45.000 | 85000 | 50.000 |
| (1v4, 6 rpm, 25°C) | 8.000 | 9.500 | 8.000 |
| (1v4, 60 rpm, 25°C) | | | |
| **Rheological Profile** Shear thinning level | Medium | High | Medium |
| **Mechanical Stability** | Unlimited | 3000 s | Unlimited |
| **Film density (g/cm³)** | 1.35 | 1.50 | 1.40 |
| **Water absorption** Cured dry film | 5% | 9% | 12% |
| **Resistance to food carriers** | Good | Poor | Poor |
| Aqueous | Good | Good | Poor |
| Fatty | | | |
| **Adherence (N/m)** To epoxy phenol lacquer, after 20 minutes hot water (100°C) immersion | 1400 | 680 | 1100 |
| **Film viscoelasticity** | | | |
| tan delta at 25°C | 0.03 | 0.08 | 0.1 |
| tan delta at 130°C | 0.20 | 0.18 | 0.6 |
| **Overall Migration (ppm)** Isooctane (substitute of Simulant D) | 3 | 9 | 5 |
| **Open torques (Ø 63 caps)** Hot-filling (kg cm) | 35 | 45 | 60 |
| Pasteurization (kg cm) | 35 | 40 | 45 |
| Retort 115°C (kg cm) | 32 | 19 | 50 |
| **Maximum Sterilization Temperature (°C)** | >130°C | 120°C | 115°C |
| **Aging test (Ø 63 caps),** retorted fish in olive oil | | | |
| Vacuum Security (mm) | 18 | 20 | 8 |
| Closure Security (mm) | 6 | 5 | 2 |
| Open Torque (kg cm), 24h after retort | 32 | 29 | 52 |
| Open Torque (kg cm), 2 months at 45°C | | | |
| after retort (equivalent 3 years at room | 40 | 45 | 65 |
| temp) | | | |
| Gasket aspect: | | | |
| Footprint | Optimal | Optimal | Too deep |
| Lid adherence | High | Low | Medium |

Without wishing to be bound by theory, it is believed that a higher particle size of the dispersion results in improved properties of the dispersion and the resulting final dry film. Mechanical stability and colloidal stability of the dispersion is increased due to steric interactions and reduction of particle mobility. Film formation speed is decreased due to a decrease of the coalescence ability of large particles allowing faster water evaporation during drying. A more complex and less compact particles net is formed after drying that gives the film more complexity and the ability to better retain other formulation materials as fillers, polymers, waxes, etc. inside the net. This complexity net aspect promotes a higher adherence level of the film with the substrate.

Furthermore, it is believed that the incorporation of a plastic material to the elastomer specially gives more stiffness that is translated in more elastic response in a higher temperature range. As well the plastic incorporates to the film less absorption accompanied by water resistance and oil resistance.

These properties are closely related to the application described as a sealant, where aspects as adherence, food carrier resistance, temperature resistance and elastic response are essential.

## Claims

1. A water-based dispersion comprising: a) a water-based medium, b) a dispersing agent, and c) a blend of a thermoplastic polymer and a non-thermoplastic elastomer as a dispersed phase.

2. The dispersion according to claim 1, wherein the dispersing agent is selected from clays such as bentonites, natural gums, salts or esters of fatty alcohols or fatty acids, milk or vegetable casein and derivatives thereof, polysaccharides, alginates, zinc soaps, tri-sodium phosphate, and other emulsifiers, and wherein the dispersing agent is preferably milk casein or vegetable casein.

3. The dispersion according to claim 1 or 2, comprising from about 8 to 30% by weight of dispersing agent based on the total weight of the blend of thermoplastic polymer and non-thermoplastic elastomer, preferably comprising from about 12 to 20% by weight of dispersing agent based on the total weight of the blend of thermoplastic polymer and non-thermoplastic elastomer.

4. The dispersion according to any one of claims 1 to 3, wherein the non-thermoplastic elastomer is selected from at least one of natural rubber (NR), polybutadiene (BR), styrene butadiene rubber (SBR), nitrile rubber (NBR), hydrogenated nitrile rubber (H-NBR), acrylic rubber (ACN), butyl rubber (IIR), brominated butyl rubber (BIIR), chlorinated butyl rubber (CIIR), polyester urethane rubber (AU), epichlorohydrin homopolymers (CO), epichlorohydrin copolymers (ECO), polychloroprene (CR), ethylene acrylic rubber (EAM), polyether urethane rubber (EU), fluoro rubber (FKM), and fluoro silicone rubber (FVMQ), and wherein the non-thermoplastic elastomer is preferably SBR, NBR and NR.

5. The dispersion according to any one of claims 1 to 4, wherein the thermoplastic polymer is selected from polyolefins, vinyl polymers, polyamides, polyesters, polyethers, polyacetals, polycarbonates, and polyurethanes, and wherein the thermoplastic polymer is preferably a polyolefin, more preferably is a polyethylene and/or polypropylene.

6. The dispersion according to any one of claims 1 to 5, wherein the weight ratio of non-thermoplastic elastomer to thermoplastic polymer is from about 95:5 to 20:80, preferably from about 90:10 to 40:60, and more preferably from about 85:15 to 60:40.

7. The dispersion according to any one of claims 1 to 5, further comprising an additive selected from at least one of inorganic fillers, organic resins, pigments, curing agents, anti-degradants, processing aids, slipping agents, foaming additives, thickeners and surfactants, and preferably at least one of thickeners and surfactants.

8. The dispersion according to any one of claims 1 to 7, comprising a surfactant and a thickening agent.

9. The dispersion according to claim 8, wherein the thickening agent is included in an amount so as to provide a Brookfield viscosity in the range of from about 100 to 100000 mPa·s, preferably from about 1000 to 10000 mPa·s, more preferably from about 1000 to 1500 mPa·s.

10. The dispersion according to claim 8 or 9, wherein the thickening agent is included in an amount of from about 0.2 to 50% by weight based on the combined weight of the thermoplastic polymer, non-thermoplastic elastomer, dispersion medium and dispersion agent; and wherein the thickening agent is preferably selected from at least one of agar-agar, carageenan, tragacanth, gummi arabicum, alginates and derivatives of alginic acid, pectines, polyoses, guar gum, locust bean gum, starch, dextrins, gelatin, carboxymethyl cellulose, hydroxyethyl cellulose, hydroxypropyl cellulose, polyacryl and polymethacryl compounds, vinyl polymers, polycarbonates, polyethers, polyimines, polyamines, poly silicic acids, clay minerals, natural gums, and urethanes; more preferably the thickening agent is selected from at least one of carboxymethyl cellulose, hydroxyethyl cellulose, hydroxypropyl cellulose, alginates and derivatives of alginic acid, clay minerals, and polyacryl and polymethacryl compounds.

11. The dispersion according to any one of claims 8 to 10, wherein the surfactant is included in an amount of from about 0.1 % to 10% by weight based on the combined weight of the thermoplastic polymer, non-thermoplastic elastomer, dispersion medium and dispersion agent, and wherein the surfactant is preferably selected from at least one of cationic, anionic, non-ionic or amphoteric surfactants, including alkylbenzene sulfonates, alkane sulfonates, fatty alcohol sulfonates, fatty alcohol ether sulfates, α-olefin sulfonates, α-ester sulfonates, alkyl phosphates, alkylether phosphates, alkylammonium compounds, imidazolinium compounds, fatty alcohol ethoxylates, alkylphenol erthoxylates, fatty amin ethoxylates, fatty acid ethoxylates, fatty acid esterethoxylates, alkanolamines, aminoxides, and N-(carboxymethyl)-imidazolinium betaines.

12. A method for the manufacture of the dispersion according to claims 1 to 11, comprising the steps:
(a) providing a solid, homogeneous blend of a thermoplastic polymer and a non-thermoplastic elastomer; and
(b) adding alkaline water-based medium to the blend and dispersing the blend in the medium in the presence of a dispersing agent.

13. The method according to claim 12, wherein from about 12 to 150 parts by weight, preferably from about 25 to 125 parts by weight of inorganic filler are added to the blend of thermoplastic polymer and non-thermoplastic elastomer, based on 100 parts of the combined weight of thermoplastic polymer and non-thermoplastic elastomer, and wherein the inorganic filler is preferably selected from at least one of carbon black, carbonates, including calcium carbonate, silicates, including silica, talc, clay, calcium sulphates, barium sulphates, alumina.

14. The method according to claim 12 and 13, wherein from about 80 to 350 parts by weight, preferably from about 100 to 200 parts by weight of water-based medium are used, based on 100 parts of the combined weight of thermoplastic polymer and non-thermoplastic elastomer.

15. The method according to claims 12 and 13, further comprising the step of adding one or more additives to the water based dispersion of the blend of thermoplastic polymer and non-thermoplastic elastomer, wherein the additives are preferably selected from at least one of inorganic fillers, organic resins, pigments, curing agents, anti-degradants, processing aids, slipping agents, foaming additives, thickeners and surfactants, more preferably at least one of thickeners and surfactants.

16. Use of a dispersion according to any one of claims 1 to 10 for providing a sealant.

17. The use according to claim 16, comprising applying the dispersion into the perimeter of a lid, preferably by spraying or injection, drying the dispersion at a temperature of from about 25°C to less than 100°C, preferably from about 60 to 90°C, and subsequently curing at a temperature of from about 100°C to 200°C, preferably from about 130 to 170°C.

18. The use according to claim 17, wherein the dispersion comprises a slipping agent, selected from natural or synthetic waxes, or siloxanes.

19. The use according to claim 16, comprising applying the dispersion on to a package, preferably by spraying or injection.

20. A lid comprising a sealant derived from the dispersion according to any one of claims 1 to 11.

21. The lid according to claim 20, wherein the lid is a metallic lid.

22. A package comprising a sealant derived from the dispersion according to any one of claims 1 to 11.

## Patentansprüche

1. Auf Wasser basierende Dispersion, umfassend: (a) ein auf Wasser basierendes Medium, (b) ein Dispergiermittel und (c) ein Gemisch eines thermoplastischen Polymers und eines nicht thermoplastischen Elastomers als eine dispergierte Phase.

2. Dispersion gemäß Anspruch 1, wobei das Dispergiermittel ausgewählt ist aus Ton, wie etwa Bentonit, natürlichen Kautschuken, Salzen oder Estern von Fettsäurealkohlen oder Fettsäuren, Milch- oder pflanzlichem Kasein und Derivaten davon, Polysachariden, Alginaten, Zinkseifen, Trinatriumphosphat und anderen Emulgiermitteln, und wobei das Dispergiermittel vorzugsweise Milchkasein oder pflanzliches Kasein ist.

3. Dispersion gemäß Anspruch 1 oder 2, umfassend von etwa 8 bis etwa 30 Gew.-% an Dispergiermittel, basierend auf dem Gesamtgewicht des Gemisches aus thermoplastischem Polymer und nicht thermoplastischen Elastomer, vorzugsweise umfassend von etwa 12 bis etwa 20 Gew.-% an Dispergiermittel, basierend auf dem Gesamtgewicht des Gemisches von thermoplastischem Polymer und nicht thermoplastischem Elastomer.

4. Dispersion gemäß einem der Ansprüche 1 bis 3, wobei das nicht thermoplastische Elastomer ausgewählt ist aus mindestens einem natürlichem Kautschuk (NR), Polybutadien (BR), Styrolbutadienkautschuk (SBR), Nitrilkautschuk (NBR), hydriertem Nitrilkautschuk (H-NBR), Acrylkautschuk (ACN), Butylkautschuk (IIR), bromiertem Butylkautschuk (BIIR), chloriertem Butlykautschuk (CIIR), Polyesterurethankautschuk (AU), Epichlorhydrinhomopolymeren (CO), Epichlorhydrincopolymeren (ECO), Polychlorpren (CR), Ethylenacrylkautschuk (EAM), Polyetherurethankautschuk (EU), Fluorkautschuk (FKM) und Fluorsilikonkautschuk (FVMQ), und wobei das nicht thermoplastische Elastomer vorzugsweise SBR, NBR und NR ist.

5. Dispersion gemäß einem der Ansprüche 1 bis 4, wobei das thermoplastische Polymer ausgewählt ist aus Polyolefinen, Vinylpolymeren, Polyamiden, Polyestern, Polyethern, Polyacetalen, Polycarbonaten und Polyurethanen, und wobei das thermoplastische Polymer vorzugsweise ein Polyolefin ist, stärker bevorzugt ein Polyethylen und/oder Polypropylen ist.

6. Dispersion gemäß einem der Ansprüche 1 bis 5, wobei das Gewichtsverhältnis von nicht thermoplastischem Elastomer zu thermoplastischem Polymer von etwa 95:5 bis 20:80 beträgt, vorzugsweise von etwa 90:10 bis 40:60, und stärker bevorzugt von etwa 85:15 bis 60:40.

7. Dispersion gemäß einem der Ansprüche 1 bis 5, weiterhin ein Additive umfassend, ausgewählt aus mindestens einem anorganischen Füllstoff, organischen Harzen, Pigmenten, Härtungsmitteln, Stabilisierungsmitteln, Verarbeitungshilfsmitteln, Gleitmitteln, Schäumungsmitteln, Verdickungsmitteln und grenzflächenaktiven Mitteln, und vorzugsweise mindestens eines aus Verdickungsmitteln und grenzflächenaktiven Mitteln.

8. Dispersion gemäß einem der Ansprüche 1 bis 7, umfassend ein grenzflächenaktives Mittel und ein Verdickungsmittel.

9. Dispersion gemäß Anspruch 8, wobei das Verdickungsmittel in einer Menge enthalten ist, so dass eine Brookfield-Viskosität im Bereich von etwa 100 bis etwa 100.000 mPa·s bereitgestellt wird, vorzugsweise von etwa 1000 bis 10.000 mPa·s, stärker bevorzugt von etwa 1000 bis 1.500 mPa·s.

10. Dispersion gemäß Anspruch 8 oder 9, wobei das Verdickungsmittel in einer Menge von etwa 0,2 bis 50 Gew.-% enthalten ist, basierend auf dem kombinierten Gewicht des thermoplastischen Polymers, nicht thermoplastischen Elastomers, Dispersionmediums und Dispergiermittels, und wobei das Verdickungsmittel vorzugsweise ausgewählt ist aus mindestens einem aus Agar-agar, Karageen, Tragant, Gummi arabicum, Alginaten und Derivaten von Alginsäure, Pektinen, Polyosen, Guargummi, Johannisbrotkernmehl, Stärke, Dextrinen, Gelatine, Carboxymethylzellulose, Hydroxyethylzellulose, Hydroxypropylzellulose, Polyacryl- und Polymethacrylverbindungen, Vinylpolymeren, Polycarbonaten, Polyethern, Polyimiden, Polyamiden, Polykieselsäuren, Tonmineralien, natürlichen Kautschuken und Urethanen; stärker bevorzugt ist das Verdickungsmittel ausgewählt aus mindestens aus Carboxymethylzellulose, Hydroxyethylzellulose, Hydroxypropylzellulose, Alginaten und Derivaten von Alginsäure, Tonmineralien und Polyacryl- und Polymethacrylverbindungen.

11. Dispersion gemäß einem der Ansprüche 8 bis 10, wobei das grenzflächenaktive Mittel in einer Menge von etwa 0,1 bis 10 Gew.-% enthalten ist, basierend auf dem kombinierten Gewicht des thermoplastischen Polymers, nicht thermoplastischen Elastomers, Dispersionsmediums und Dispergiermittels, und wobei das Grenzflächen aktive Mittel vorzugsweise ausgewählt ist aus mindestens einem aus kationischen, anionischen, nicht-ionischen oder amphotheren grenzflächenaktiven Mitteln, einschließlich Alkylbenzolsulphonaten, Alkansulphonaten, Fettsäurealkoholsulphonaten, Fettsäurealkohlethersulphonaten, α-Olephinsulphonaten, α-Estersulphonaten, Alkylphosphaten, Alkyletherphosphaten, Alkylammoniumverbindungen, Imidazoliniumverbindungen, Fettsäurealkoholethoxylaten, Alkylphenolethoxylaten, Fettsäureaminethoxylaten, Fettsäureethoxylaten, Fettsäureesterethoxylaten, Alkanolaminen, Aminoxiden und N-(Carboxymethyl)-imidazoliniumbetainen.

12. Verfahren zur Herstellung der Dispersion gemäß einem der Ansprüche 1 bis 11, umfassend die Schritte:
(a) Bereitstellen eines festen, homogenen Gemisches eines thermoplastischen Polymers und eines nicht thermoplastischen Elastomers; und
(b) Zugeben eines alkalischen, auf Wasser basierenden Mediums zu dem Gemisch und Dispergieren des Gemisches in dem Medium in Gegenwart eines Dispergiermittels.

13. Verfahren gemäß Anspruch 12, wobei von etwa 12 bis etwa 150 Gewichtsteile, vorzugsweise von etwa 25 bis 125 Gewichtsteile eines anorganischen Füllstoffs zu dem Gemisch des thermoplastischen Polymers und nicht thermoplastischen Elastomers gegeben werden, basierend auf 100 Gewichtsteilen des kombinierten Gewichts von thermoplastischem Polymer und nicht thermoplastischem Elastomer, und wobei der anorganische Füllstoff vorzugsweise ausgewählt ist aus mindestens einem aus Ruß, Carbonaten, einschließlich Kalziumcarbonat, Silikaten, einschließlich Siliziumdioxid, Talkum, Ton, Kalziumsulphaten, Bariumsulphaten, Aluminiumoxid.

14. Verfahren gemäß Anspruch 12 und 13, wobei von etwa 80 bis 350 Gewichtsteile, vorzugsweise von etwa 100 bis 200 Gewichtsteile an auf Wasser basierendem Medium verwendet werden, bezogen auf 100 Gewichtsteile des kombinierten Gewichts von thermoplastischem Polymer und nicht thermoplastischem Elastomer.

15. Verfahren gemäß Anspruch 12 und 13, weiterhin den Schritt des Zugebens eines oder mehrerer Additive zu der auf Wasser basierenden Dispersion des Gemisches von thermoplastischem Polymer und nicht thermoplastischem Elastomer umfassend, wobei die Additive vorzugsweise ausgewählt sind aus mindestens einem aus anorganischen Füllstoffen, organischen Harzen, Pigmenten, Härtungsmitteln, Stabilisierungsmitteln, Verarbeitungsmitteln, Gleitmitteln, Schäumungsmitteln, Verdickungsmitteln und grenzflächenaktiven Mitteln, stärker bevorzugt mindestens einem aus Verdickungsmitteln und grenzflächenaktiven Mitteln.

16. Verwendung einer Dispersion gemäß einem der Ansprüche 1 bis 10 zur Bereitstellung eines Dichtungsmittels.

17. Verwendung gemäß Anspruch 16, umfassend Aufbringen der Dispersion in den Umriss einer Einlage, vorzugsweise durch Sprühen oder Einspritzen, Trocknen der Dispersion bei einer Temperatur von etwa 25°C bis weniger als 100°C, vorzugsweise von etwa 60 bis 90°C, und nachfolgend Härten bei einer Temperatur von etwa 100°C bis 200°C, vorzugsweise von etwa 130°C bis 170°C.

18. Verwendung gemäß Anspruch 17, wobei die Dispersion ein Gleitmittel umfasst, ausgewählt aus natürlichen oder synthetischen Wachsen oder Siloxanen.

19. Verwendung gemäß Anspruch 16, umfassend Aufbringen der Dispersion auf eine Verpackung, vorzugsweise durch Sprühen oder Einspritzen.

20. Einlage, umfassend ein Dichtungsmittel abgeleitet von der Dispersion gemäß einem der Ansprüche 1 bis 11.

21. Einlage gemäß Anspruch 20, wobei die Einlage eine metallische Einlage ist.

22. Verpackung, umfassend ein Dichtungsmittel abgeleitet von der Dispersion gemäß einem der Ansprüche 1 bis 11.

## Revendications

1. Dispersion aqueuse comprenant : a) un milieu à base d'eau, b) un agent dispersant, et c) un mélange d'un polymère thermoplastique et d'un élastomère non-thermoplastique en tant que phase dispersée.

2. Dispersion selon la revendication 1, dans laquelle l'agent dispersant est choisi parmi les argiles telles que les bentonites, les gommes naturelles, les sels ou les esters d'alcools gras ou d'acides gras, la caséine du lait ou végétale et leurs dérivés, les polysaccharides, les alginates, les savons de zinc, le trisodium le phosphate, et d'autres émulsifiants, et dans lequel l'agent dispersant est de préférence la caséine du lait ou la caséine végétale.

3. Dispersion selon la revendication 1 ou 2, comprenant d'environ 8 à 30% en poids d'agent dispersant par rapport au poids total du mélange de polymère thermoplastique et d'élastomère non thermoplastique, comprenant de préférence d'environ 12 à 20% en poids d'agent dispersant par rapport au poids total du mélange de polymère thermoplastique et d'élastomère non thermoplastique.

4. Dispersion selon l'une quelconque des revendications 1 à 3, dans lequel l'élastomère non thermoplastique est choisi à partir d'au moins l'un parmi un caoutchouc naturel (NR), le polybutadiène (BR), un caoutchouc styrène-butadiène (SBR), un caoutchouc nitrile (NBR), un caoutchouc nitrile hydrogéné (H-NBR), un caoutchouc acrylique (ACN), un caoutchouc butyle (IIR), un caoutchouc butyle bromé (BIIR), un caoutchouc butyle chloré (CIIR), un caoutchouc polyester uréthane (AU), des homopolymères d'épichlorhydrine (CO), des copolymères d'épichlorhydrine CEO), du polychloroprène (CR), un caoutchouc acrylique d'éthylène (EAM), un caoutchouc uréthane polyéther (UE), un caoutchouc fluoré (FKM), et un caoutchouc de silicone fluoré (FVMQ), et dans lequel l'élastomère non thermoplastique est de préférence le SBR, le NBR et le NR.

5. Dispersion selon l'une quelconque des revendications 1 à 4, dans lequel le polymère thermoplastique est choisi parmi les polyoléfines, les polymères vinyliques, les polyamides, les polyesters, les polyéthers, les polyacétals, les polycarbonates et les polyuréthanes, et dans lequel le polymère thermoplastique est de préférence une polyoléfine, plus préférentiellement un polyéthylène et/ou du polypropylène.

6. Dispersion selon l'une quelconque des revendications 1 à 5, dans lequel le rapport en poids d'élastomère non thermoplastique sur un polymère thermoplastique est d'environ 95:5 à 20:80, de préférence d'environ 90:10 à 40:60, et plus préférentiellement d'environ 85:15 à 60:40.

7. Dispersion selon l'une quelconque des revendications 1 à 5, comprenant en outre un additif sélectionné à partir d'au moins l'un parmi des charges inorganiques, des résines organiques, des pigments, des agents de durcissement, des agents anti-dégradants, des auxiliaires technologiques, des agents de glissement, des additifs moussants, des épaississants et des agents tensioactifs, et de préférence d'au moins l'un des épaississants et des agents tensioactifs.

8. Dispersion selon l'une quelconque des revendications 1 à 7, comprenant un tensioactif et un agent épaississant.

9. Dispersion selon la revendication 8, dans lequel l'agent épaississant est inclus dans une quantité permettant de fournir une viscosité Brookfield comprise dans la plage d'environ 100 à 100 000 mPa·s, de préférence d'environ 1000 à 10000 mPa·s, plus préférentiellement d'environ 1000 à 1500 mPa·s.

10. Dispersion selon la revendication 8 ou 9, dans lequel l'agent épaississant est inclus dans une quantité d'environ 0,2 à 50% en poids par rapport au poids combiné du polymère thermoplastique, de l'élastomère non-thermoplastique, du milieu de dispersion et de l'agent de dispersion, et dans lequel l'agent épaississant est de préférence sélectionné à partir d'au moins l'un parmi de l'agar-agar, de la carraghénane, de la gomme adragante, de la gomme arabique, des alginates et des dérivés de l'acide alginique, des pectines, des polyoses, de la gomme de guar, de la gomme de caroube, de l'amidon, des dextrines, de la gélatine, de la carboxyméthylcellulose, de l'hydroxyéthylcellulose, de l'hydroxypropylcellulose, des composés de polyacryle et polyméthacrylate, des polymères vinyliques, des polycarbonates, des polyéthers, des polyimines, des polyamines, des poly acides siliciques, des minéraux argileux, des gommes naturelles, et des uréthanes; plus préférentiellement l'agent épaississant est sélectionné à partir d'au moins l'un parmi de la carboxyméthylcellulose, de l'hydroxyéthylcellulose, de l'hydroxypropyl cellulose, des alginates et des dérivés de l'acide alginique, des minéraux argileux, et des composés de polyacryle et polyméthacrylate.

11. Dispersion selon l'une quelconque des revendications 8 à 10, dans lequel le tensioactif est compris dans une quantité d'environ 0,1% à 10% en poids par rapport au poids combiné du polymère thermoplastique, de l'élastomère non-thermoplastique, du milieu de dispersion et de l'agent de dispersion , et dans lequel l'agent tensioactif est de préférence sélectionné à partir d'au moins l'un parmi des agents tensioactifs cationiques, anioniques, non ioniques ou amphotères, incluant des sulfonates d'alkylbenzène, des sulfonates d'alcane, des sulfonates d'alcool gras, des sulfates d'éther d'alcool gras, des sulfonates, d'oléfine-a, des sulfonates d'ester-α, des phosphates d'alkyle, des phosphates d'alkyléther, des composés d'alkylammonium, des composés d'imidazolinium, des éthoxylates d'alcools gras, des erthoxylates d'alkylphénol, des éthoxylates d'amines grasses, des éthoxylates d'acides gras, des esterethoxylates d'acides gras, des alcanolamines, des aminoxydes, et des bétaïnes N-(carboxyméthyl)-imidazolinium.

12. Procédé pour la fabrication de la dispersion selon les revendications 1 à 11, comprenant les étapes consistant à :
(A) fournir un mélange solide, homogène d'un polymère thermoplastique et d'un élastomère non-thermoplastique, et
(B) ajouter un support à base d'eau alcaline au mélange et disperser le mélange dans le milieu en présence d'un agent dispersant.

13. Procédé selon la revendication 12, dans lequel d'environ 12 à 150 parties en poids, de préférence d'environ 25 à 125 parties en poids de charge inorganique sont ajoutées au mélange de polymère thermoplastique et d'élastomère non-thermoplastique, sur la base de 100 parties du poids combiné de polymère thermoplastique et d'élastomère non-thermoplastique, et dans lequel la charge inorganique est de préférence sélectionnée à partir d'au moins l'un parmi un noir de carbone, des carbonates, y compris du carbonate de calcium, des silicates, notamment de la silice, du talc, de l'argile, des sulfates de calcium, des sulfates de baryum, de l'alumine.

14. Procédé selon la revendication 12 et 13, dans lequel d'environ 80 à 350 parties en poids, de préférence d'environ 100 à 200 parties en poids de support à base d'eau sont utilisées, sur la base de 100 parties du poids combiné de polymère thermoplastique et d'élastomère non thermoplastique.

15. Procédé selon les revendications 12 et 13, comprenant en outre l'étape consistant à ajouter un ou plusieurs additifs à la dispersion à base d'eau du mélange de polymère thermoplastique et d'élastomère non-thermoplastique, dans lequel les additifs sont de préférence choisis parmi au moins l'une des charges inorganiques, des résines organiques, des pigments, des agents de durcissement, des agents anti-dégradants, des auxiliaires technologiques, des agents de glissement, des additifs moussants, des épaississants et des agents tensioactifs, de préférence au moins l'un des épaississants et des agents tensioactifs.

16. Utilisation d'une dispersion selon l'une quelconque des revendications 1 à 10 pour fournir un matériau d'étanchéité.

17. Utilisation selon la revendication 16, comprenant l'application de la dispersion dans le périmètre d'un couvercle, de préférence par pulvérisation ou injection, le séchage de la dispersion à une température d'environ 25 °C jusqu'à moins de 100 °C, de préférence d'environ 60 à 90 °C, et ensuite le durcissement à une température d'environ 100 °C à 200 °C, de préférence d'environ 130 à 170 °C.

18. Utilisation selon la revendication 17, dans lequel la dispersion comprend un agent de glissement sélectionné à partir de cires naturelles ou synthétiques ou de siloxanes.

19. Utilisation selon la revendication 16, comprenant l'application de la dispersion sur un emballage, de préférence par pulvérisation ou injection.

20. Couvercle comprenant un matériau d'étanchéité provenant de la dispersion selon l'une quelconque des revendications 1 à 11.

21. Couvercle selon la revendication 20, dans lequel le couvercle est un couvercle métallique.

22. Emballage comprenant un produit d'étanchéité provenant de la dispersion selon l'une quelconque des revendications 1 à 11.
